# EUROPEAN PATENT APPLICATION

(11) **EP 3 051 176 A1**
(43) Date of publication of application: **03.08.2016**
(21) Application number: 14871978.4
(22) Date of filing: 16.06.2014
(51) Int. Cl.: F16F 15/02, E04B 1/98, F16L 3/16

(54) **VIBRATION-DAMPING MATERIAL AND METHOD FOR ATTACHING VIBRATION-DAMPING MATERIAL**

(30) Priority: 17.12.2013 JP 2013260648
(71) Applicant: Mitsubishi Heavy Industries, Ltd., Tokyo 108-8215 (JP); Mitsubishi Heavy Industries Compressor Corporation, Minato-ku Tokyo 108-0014 (JP)
(72) Inventor: HOSOYA, Hiroyuki, Tokyo 108-8215 (JP); KODA, Takuro, Hiroshima-shi Hiroshima 733-8553 (JP)
(74) Representative: Studio Torta S.p.A.
(86) International application number: PCT/JP2014/065928
(87) International publication number: WO 2015/093081

(57) **Abstract**

A vibration-damping material which can be arranged without gaps along the shape of the outer surface of a base material, that is, a vibration-damping material (1) which is attached to a convex curved outer surface (10a) of a base material (10) and comprises a vibration-damping member (2) capable of bending deformation and having multiple cuts (2c) in an attachment surface (2a) to be adhered to the outer surface (10a), thereby dividing the attachment surface into multiple blocks (2d), with the surface (2b) of each block (2d) opposite the attachment surface (2a) being formed connected to each other.

## Description

### Technical Field

The present invention relates to a vibration-damping material attached to an outer surface of a base material, the vibration of which is desired to be suppressed, and to a method for attaching a vibration-damping material in which a vibration-damping material is attached to a base material.

### Background Art

In the related art, a multi-layer soundproofing material disclosed in PTL 1 is applied to an uneven-surface base material (structural member) having a convex surface or the like. The multi-layer soundproofing material is a multi-layer sheet-like object in which a vibration-damping member, that is, a viscoelastic member, is provided on a base material side, and a sound absorbing member is provided on the outside of the vibration-damping member. Cuts are provided in the sound absorbing member so as to correspond to a convex surface, and the sound absorbing member is attached to the base material with gaps formed in cut portions.

### Citation List

### Patent Literature

[PTL 1] Japanese Unexamined Patent Application Publication No. 64-42227

### Summary of Invention

### Technical Problem

According to technology disclosed in PTL 1, the vibration-damping member is formed of a viscoelastic member, and conforms to and is in close contact with the convex surface of the uneven-surface base material. The vibration-damping member may be able to conform to the shape of an outer surface of a straight portion (straight tubular portion) of a pipe. In contrast, the vibration-damping member is unlikely to be able to conform to the shape of an outer surface of a bent portion of a pipe, which is deformed in a complex manner in multiple directions. In this case, the vibration-damping material may be wrinkled, and thus gaps between the vibration-damping member and the base material are formed, and vibration damping performance is decreased. According to the technology disclosed in PTL 1, the conformation of the vibration-damping member to the shape of the base material is obtained by thermally softening the vibration-damping material, and then the vibration-damping member is hardened by a curing agent, thereby requiring an amount of labor and time for attaching the vibration-damping member to the base material.

The present invention is made to solve this problem, and an object of the present invention is to provide a vibration-damping material which can be disposed along the shape of an outer surface of a base material without gaps between the vibration-damping material and the base material, and a method for attaching a vibration-damping material.

### Solution to Problem

According to an aspect of the present invention, in order to achieve the aforementioned object, there is provided a vibration-damping material which is attached to a convex outer surface of a base material, the material including: a vibration-damping member which can be deformed in a bending manner, is partitioned into multiple blocks by multiple cuts which are formed in an attachment surface adhered to the outer surface, and is formed by connecting together portions of the blocks, with the portions positioned close to a surface which is opposite to the attachment surface.

In the vibration-damping material, since the surface opposite to the attachment surface is continuously formed, when the attachment surface of the vibration-damping member is adhered to the outer surface of the base material, in a state where the separation of the portions (positioned close to the surface) of the blocks from each other by the cuts is restricted, facing surfaces of the blocks are in close contact with each other with the cuts interposed between the facing surfaces, and the vibration-damping member is continuously attached to the outer surface of the base material along the convex shape of the outer surface without gaps between the vibration-damping member and the outer surface. As a result, the entirety of the vibration-damping member can be deformed in a bending manner sufficiently to dissipate vibration energy of the base material, and it is possible to considerably suppress vibration of the base material. In addition, since the vibration-damping member is disposed in such a way that the facing surfaces of the multiple blocks are in close contact with each other with the cuts interposed between the facing surfaces, vibration energy of the base material is dissipated by frictional resistance of the surfaces in close contact with each other. As a result, it is possible to improve vibration suppressing performance of the vibration-damping material.

In the vibration-damping material of the present invention, the vibration-damping member is partitioned into the multiple blocks by the cuts, and is formed by connecting together the portions of the blocks via a sheet-like member, with the portions positioned close to the surface which is opposite to the attachment surface.

In the vibration-damping material, since the blocks are held by the sheet-like member in order for the cuts to suppress the separation of the portions (positioned close to the surface) of the blocks from the sheet-like member, close contact between the facing surfaces of the blocks of the vibration-damping member can be improved with the cuts interposed between the facing surfaces. As a result, it is possible to improve vibration suppressing performance.

In the vibration-damping material of the present invention, each of the cuts of the vibration-damping member is formed into the shape of a V-shaped groove, the width of which gradually increases toward the attachment surface.

In the vibration-damping material, since each of the cuts is formed into the shape of a V-shaped groove, the width of which gradually increases toward the attachment surface, when the vibration-damping member is attached to the convex outer surface of the base material, in a case where the facing surfaces of the blocks of the vibration-damping member are in close contact with each other with the cuts interposed between the facing surfaces, deformation of the vibration-damping member can be suppressed by the V-shaped grooves. As a result, it is possible to ensure the amount of bending deformation of the vibration-damping member caused by vibration of the base material, and to improve vibration suppressing performance.

In the vibration-damping material of the present invention, the attachment surface of the vibration-damping member is partitioned into polygonal blocks by the cuts.

In the damping-vibration material, since the attachment surface, which is partitioned in a polygonal pattern, is adopted, the vibration-damping material can be attached to the outer surface of the base material, which is formed into various convex shapes.

According to another aspect of the present invention, in order to achieve the aforementioned object, there is provided a method for attaching a vibration-damping material in which a vibration-damping material is attached to a convex outer surface of a base material, in which a vibration-damping member is partitioned into multiple blocks by forming cuts in an attachment surface of the vibration-damping member adhered to the outer surface of the base material, the vibration-damping material is formed by connecting together the blocks via the provision of a sheet-like member on portions of the blocks, with the portions positioned close to a surface which is opposite to the attachment surface, and the attachment surface of the vibration-damping member is adhered to the outer surface of the base material.

According to the method for attaching a vibration-damping material, since the portions (positioned close to the surface) of the blocks partitioned from each other by the cuts are connected to each other via the sheet-like member, when the sheet-like member is wrapped around the base material along the convex shape of the outer surface of the base material, the blocks of the vibration-damping member can be adhered to the outer surface of the base material along the convex shape of the outer surface. As a result, it is possible to easily attach the vibration-damping material to the outer surface of the base material.

In the method for attaching a vibration-damping material of the present invention, each of the cuts of the vibration-damping member is formed into the shape of a V-shaped groove, the width of which gradually increases toward the attachment surface.

According to the vibration-damping material attachment method, since each of the cuts is formed into the shape of a V-shaped groove, the width of which gradually increases toward the attachment surface, when the vibration-damping member is attached to the convex outer surface of the base material, in a case where the facing surfaces of the blocks of the vibration-damping member are in close contact with each other with the cuts interposed between the facing surfaces, deformation of the vibration-damping member can be suppressed by the V-shaped grooves. As a result, resilience of the vibration-damping member caused by deformation is suppressed, and thus, it is possible to easily attach the vibration-damping material to the outer surface of the base material.

### Advantageous Effects of Invention

According to the present invention, a vibration-damping material can be disposed along the shape of an outer surface of a base material without gaps between the vibration-damping material and the base material.

### Brief Description of Drawings

Fig. 1 is a sectional view of a vibration-damping material in an embodiment of the present invention.
Fig. 2 is a top view of the vibration-damping material in the embodiment of the present invention.
Fig. 3 is a sectional view illustrating an attachment state of the vibration-damping material in the embodiment of the present invention.
Fig. 4 is a sectional view illustrating another example of the vibration-damping material in the embodiment of the present invention.
Fig. 5 is a sectional view illustrating still another example of the vibration-damping material in the embodiment of the present invention.
Fig. 6 is a top view illustrating still another example of the vibration-damping material in the embodiment of the present invention.
Fig. 7 is a top view illustrating still another example of the vibration-damping material in the embodiment of the present invention.
Fig. 8 is a top view illustrating still another example of the vibration-damping material in the embodiment of the present invention.

### Description of Embodiments

Hereinafter, an embodiment of the present invention will be described in detail with reference to the accompanying drawings. The present invention is not limited by this embodiment. Configuration elements in the embodiment include elements which can be easily replaced by the skilled person in the art, or substantially the same elements.

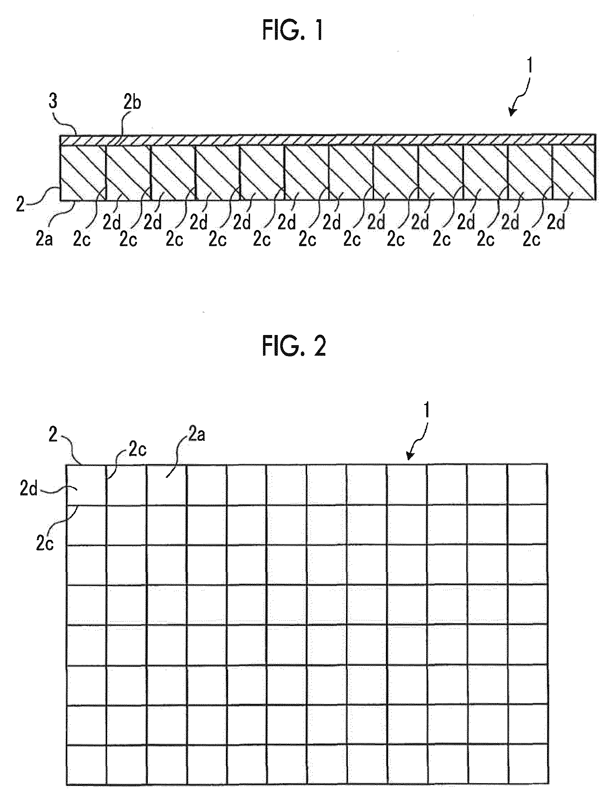

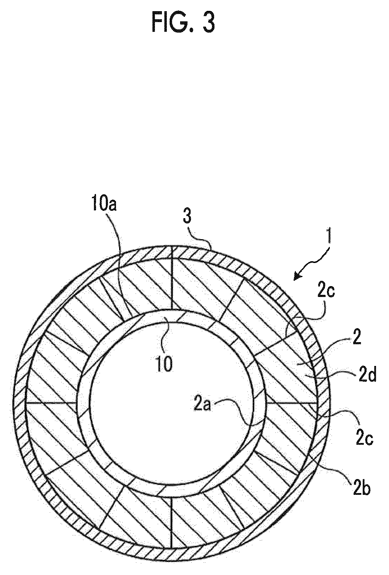

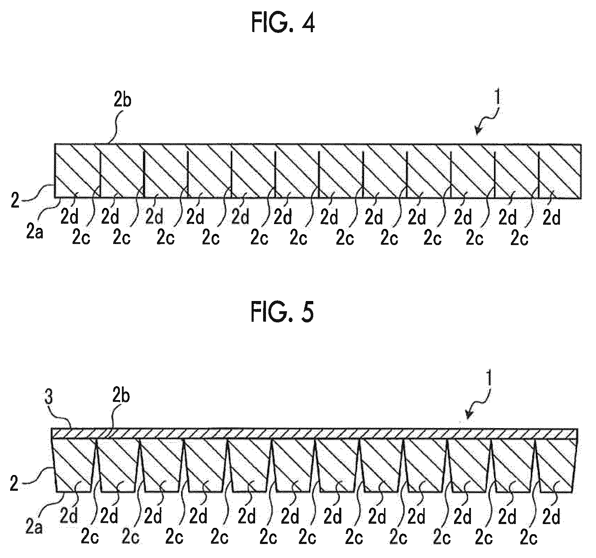

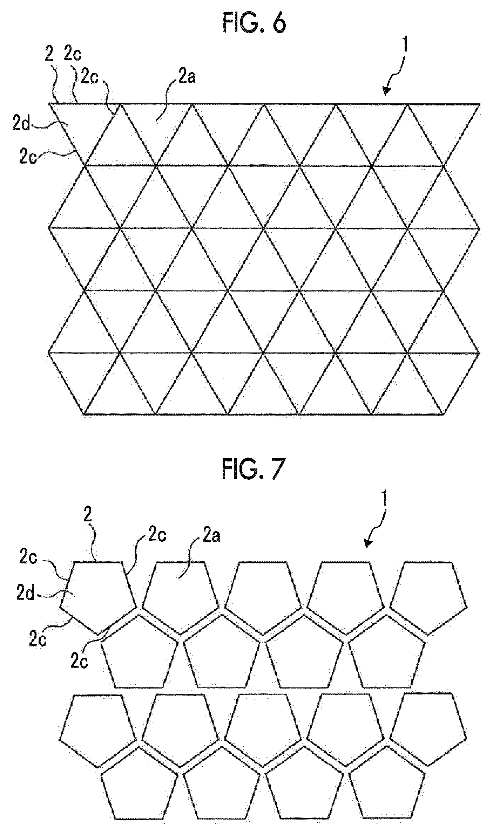

Fig. 1 is a sectional view of a vibration-damping material in the embodiment. Fig. 2 is a top view of the vibration-damping material in the embodiment. Fig. 3 is a sectional view illustrating an attachment state of the vibration-damping material in the embodiment. Figs. 4 and 5 are sectional views illustrating other examples of the vibration-damping material in the embodiment. Figs. 6 to 8 are top views illustrating other examples of the vibration-damping material in the embodiment.

As illustrated in Figs. 1 to 3, a vibration-damping material 1 in the embodiment is adhered to a convex outer surface 10a (as illustrated in Fig. 3) of a base material 10. In Fig. 3, a pipe is illustrated as the base material 10. The sectional shape (illustrated in Fig. 3) of a straight portion (straight pipe portion) of a pipe is continuously formed straightly, and in a bent portion of the pipe, bends in multiple directions are formed in a complex manner on an outer surface of the bent portion by adding bent convexities to a convex sectional shape, and a partial spherical shape is formed. The base material 10 is not limited to a pipe. The base material 10 may be a plate-like member, a columnar member, or the like insofar as each of these members includes the convex outer surface 10a.

The vibration-damping material 1 includes a vibration-damping member 2. The vibration-damping member 2 is adhered to the outer surface 10a of the base material 10, and suppresses vibration of the base material 10 by dissipating vibration energy of the base material 10 mainly via bending deformation. Accordingly, a vibration-damping member adopted as the vibration-damping member 2 can be deformed in a bending manner by vibration energy of the base material 10.

The vibration-damping member 2 includes an attachment surface 2a adhered to the outer surface 10a of the base material 10, and a surface 2b provided opposite to the attachment surface 2a in a thickness direction (a direction in which the surface 2b is positioned away from the outer surface 10a of the base material 10). Multiple cuts 2c are formed in the attachment surface 2a of the vibration-damping member 2. The cuts 2c are formed in the attachment surface 2a in such a way as to intersect with each other, and thus, the vibration-damping member 2 is partitioned into multiple blocks 2d. In Fig. 2, the cuts 2c are formed in such a way as to intersect with each other in a matrix pattern, and the multiple blocks 2d having a rectangular shape in a top view are formed.

The vibration-damping member 2 is formed in such a way that portions (positioned close to the surface 2b) of the multiple blocks 2d are connected to each other. With regard to the configuration of connection, as illustrated in Figs. 1 and 3, a sheet-like member 3 is provided on the surface 2b of the vibration-damping member 2, and thus, portions (positioned close to the surface 2b) of the blocks 2d partitioned from each other by the cuts 2c are connected to each other via the sheet-like member 3. When the vibration-damping material 1 is attached to the outer surface 10a of the base material 10 as illustrated in Fig. 3, a member adopted as the sheet-like member 3 can be deformed in a bending manner along the convex shape of the outer surface 10a. Specifically, a rubber member, a nonwoven polyester-based fabric, or the like is preferably used as the sheet-like member 3.

With regard to the configuration of the connection of the multiple blocks 2d in the vibration-damping member 2, as illustrated in Fig. 4, the cuts 2c may be provided to end in the middle of the vibration-damping member 2 in the thickness direction without passing through the surface 2b such that the vibration-damping member 2 is partitioned into the blocks 2d, and the portions (positioned close to the surface 2b) of the blocks 2d are connected to each other.

As illustrated in Fig. 3, the attachment surface 2a of the vibration-damping member 2 is adhered to the outer surface 10a of the base material 10 such that the vibration-damping material 1 is attached to the base material 10. The vibration-damping member 2 may be adhered to the base material 10 using an adhesive, a double-sided adhesive sheet, or the like. Since the surface 2b opposite to the attachment surface 2a is continuously formed, the vibration-damping member 2 is disposed along the convex shape of the outer surface 10a of the base material 10 in a state where the separation of the portions (positioned close to the surface 2b) of the blocks 2d from each other by the cuts 2c is restricted. For this reason, while facing surfaces of the blocks 2d are in close contact with each other with the cuts 2c interposed between the facing surfaces, the vibration-damping member 2 can be deformed in a bending manner such that the vibration-damping member 2 is continuously attached to the outer surface 10a of the base material 10 along the convex shape of the outer surface 10a without gaps between the vibration-damping member 2 and the outer surface 10a. Since the cuts 2c are formed in the attachment surface 2a of the vibration-damping member 2 in such a way as to intersect with each other, while the facing surfaces of the blocks 2d are in close contact with each other, the vibration-damping member 2 is deformed to conform to the convex outer surface 10a which is deformed in a complex manner in multiple directions along the bent portion of the pipe. The cuts 2c may be formed straightly with respect to the convex outer surface 10a having a uniform curvature like the straight portion (straight pipe portion) of the pipe. The vibration-damping member 2 is deformed to conform to the shape of the outer surface 10a while the facing surfaces of the blocks 2d are in close contact with each other.

In a case where the vibration-damping material 1 includes the sheet-like member 3, since the portions (positioned to close to the surface 2b) of the blocks 2d partitioned from each other by the cuts 2c are connected to each other via the sheet-like member 3, when the vibration-damping material 1 is wrapped around the base material 10 along the convex shape of the outer surface 10a of the base material 10, it is possible to adhere the blocks 2d of the vibration-damping member 2 to the outer surface 10a of the base material 10 along the convex shape of the outer surface 10a.

As such, the vibration-damping material 1 in the embodiment is attached to the convex outer surface 10a of the base material 10. The vibration-damping material 1 includes the vibration-damping member 2 which can be deformed in a bending manner, is partitioned into the multiple blocks 2d by the multiple cuts 2c which is formed in the attachment surface 2a adhered to the outer surface 10a, and is formed by connecting together the portions (positioned close to the surface 2b which is opposite to the attachment surface 2a) of the blocks 2d.

In the vibration-damping material 1, since the surface 2b opposite to the attachment surface 2a is continuously formed, when the attachment surface 2a of the vibration-damping member 2 is adhered to the outer surface 10a of the base material 10, in a state where the separation of the portions (positioned close to the surface 2b) of the blocks 2d from each other by the cuts 2c is restricted, the facing surfaces of the blocks 2d are in close contact with each other with the cuts 2c interposed between the facing surfaces, and the vibration-damping member 2 is continuously attached to the outer surface 10a of the base material 10 along the convex shape of the outer surface 10a without gaps between the vibration-damping member 2 and the outer surface 10a. As a result, the entirety of the vibration-damping member 2 can be deformed in a bending manner sufficiently enough to dissipate vibration energy of the base material 10, and it is possible to considerably suppress vibration of the base material 10. In addition, in the vibration-damping material 1, since the vibration-damping member 2 is disposed in such a way that the facing surfaces of the multiple blocks 2d are in close contact with each other with the cuts 2c interposed between the facing surfaces, vibration energy of the base material 10 is dissipated by frictional resistance of the surfaces in close contact with each other. As a result, it is possible to improve vibration suppressing performance of the vibration-damping material 1.

In the vibration-damping material 1 in the embodiment, the vibration-damping member 2 is partitioned into the multiple blocks 2d by the cuts 2c, and the portions (positioned close to the surface 2b opposite to the attachment surface 2a) of the blocks 2d are connected to each other via the sheet-like member 3.

In the vibration-damping material 1, since the blocks 2d are held by the sheet-like member 3, and the separation of the portions (positioned close to the surface 2b) of the blocks 2d from each other by the cuts 2c is suppressed, close contact between the facing surfaces of the blocks 2d of the vibration-damping member 2 can be improved with the cuts 2c interposed between the facing surfaces. As a result, it is possible to improve vibration suppressing performance.

In the vibration-damping material 1 in the embodiment, as illustrated in Fig. 5, each of the cuts 2c of the vibration-damping member 2 is preferably formed into the shape of a V-shaped groove, the width of which gradually increases toward the attachment surface 2a.

In the vibration-damping material 1, since each of the cuts 2c is formed into the shape of a V-shaped groove, the width of which gradually increases toward the attachment surface 2a, when the vibration-damping member 2 is attached to the convex outer surface 10a of the base material 10, in a case where the facing surfaces of the blocks 2d of the vibration-damping member 2 are in close contact with each other with the cuts 2c interposed between the facing surfaces, deformation of the vibration-damping member 2 can be suppressed by the V-shaped grooves. As a result, it is possible to ensure the amount of bending deformation of the vibration-damping member 2 caused by vibration of the base material 10, and to improve vibration suppressing performance.

In the vibration-damping material 1 in the embodiment, as illustrated in Figs. 2, and 6 to 8, the attachment surface 2a of the vibration-damping member 2 is preferably partitioned into polygonal blocks 2d by the cuts 2c.

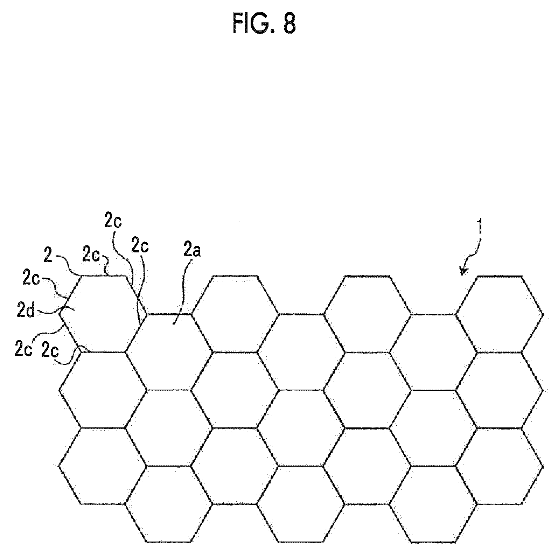

Fig. 2 is a view illustrating a pattern in which the vibration-damping member 2 is partitioned into the rectangular blocks 2d by the cuts 2c. Fig. 6 is a view illustrating a pattern in which the vibration-damping member 2 is partitioned into triangular blocks 2d by the cuts 2c. Fig. 7 is a view illustrating a pattern in which the vibration-damping member 2 is partitioned into pentagonal blocks 2d by the cuts 2c. Fig. 8 is a view illustrating a pattern in which the vibration-damping member 2 is partitioned into hexagonal blocks 2d by the cuts 2c. Since the attachment surface 2a of the vibration-damping member 2, which is partitioned in a polygonal pattern, is adopted, the vibration-damping material 1 can be attached to the outer surface 10a of the base material 10, which is formed into various convex shapes.

A method for attaching a vibration-damping material in the embodiment is a method of attaching vibration-damping material 1 to the convex outer surface 10a of the base material 10. The vibration-damping member 2 is partitioned into the multiple blocks 2d by forming the cuts 2c in the attachment surface 2a of the vibration-damping member 2 adhered to the outer surface 10a of the base material 10. The vibration-damping material 1 is formed by connecting together the blocks 2d via the provision of the sheet-like member 3 on the portions of the blocks 2d, with the portions positioned close to the surface 2b which is opposite to the attachment surface 2a. The attachment surface 2a of the vibration-damping member 2 is adhered to the outer surface 10a of the base material 10.

According to the method for attaching a vibration-damping material, since the portions (positioned close to the surface 2b) of the blocks 2d partitioned from each other by the cuts 2c are connected to each other via the sheet-like member 3, when the sheet-like member 3 is wrapped around the base material 10 along the convex shape of the outer surface 10a of the base material 10, the blocks 2d of the vibration-damping member 2 can be adhered to the outer surface 10a of the base material 10 along the convex shape of the outer surface 10a. As a result, it is possible to easily attach the vibration-damping material 1 to the outer surface 10a of the base material 10.

According to the vibration-damping material attachment method in the embodiment, each of the cuts 2c of the vibration-damping member 2 is preferably formed into the shape of a V-shaped groove, the width of which gradually increases toward the attachment surface 2a.

According to the vibration-damping material attachment method, since each of the cuts 2c is formed into the shape of a V-shaped groove, the width of which gradually increases toward the attachment surface 2a, when the vibration-damping member 2 is attached to the convex outer surface 10a of the base material 10, in a case where the facing surfaces of the blocks 2d of the vibration-damping member 2 are in close contact with each other with the cuts 2c interposed between the facing surfaces, deformation of the vibration-damping member 2 can be suppressed by the V-shaped grooves. As a result, resilience of the vibration-damping member 2 caused by deformation is suppressed, and thus, it is possible to easily attach the vibration-damping material 1 to the outer surface 10a of the base material 10.

### Reference Signs List

- 1:: VIBRATION-DAMPING MATERIAL
- 2:: VIBRATION-DAMPING MEMBER
- 2a:: ATTACHMENT SURFACE
- 2b:: SURFACE
- 2c:: CUT
- 2d:: BLOCK
- 3:: SHEET-LIKE MEMBER
- 10:: BASE MATERIAL
- 10a:: OUTER SURFACE

## Claims

1. A vibration-damping material which is attached to a convex outer surface of a base material, the material comprising:
a vibration-damping member which can be deformed in a bending manner, is partitioned into multiple blocks by multiple cuts which are formed in an attachment surface adhered to the outer surface, and is formed by connecting together portions of the blocks, with the portions positioned close to a surface which is opposite to the attachment surface.

2. The vibration-damping material according to claim 1,
wherein the vibration-damping member is partitioned into the multiple blocks by the cuts, and is formed by connecting together the portions of the blocks via a sheet-like member, with the portions positioned close to the surface which is opposite to the attachment surface.

3. The vibration-damping material according to claim 1 or 2,
wherein each of the cuts of the vibration-damping member is formed into the shape of a V-shaped groove, the width of which gradually increases toward the attachment surface.

4. The vibration-damping material according to any one of claims 1 to 3,
wherein the attachment surface of the vibration-damping member is partitioned into polygonal blocks by the cuts.

5. A method for attaching a vibration-damping material in which a vibration-damping material is attached to a convex outer surface of a base material,
wherein a vibration-damping member is partitioned into multiple blocks by forming cuts in an attachment surface of the vibration-damping member adhered to the outer surface of the base material, the vibration-damping material is formed by connecting together the blocks via the provision of a sheet-like member on portions of the blocks, with the portions positioned close to a surface which is opposite to the attachment surface, and the attachment surface of the vibration-damping member is adhered to the outer surface of the base material.

6. The method for attaching a vibration-damping material according to claim 5,
wherein each of the cuts of the vibration-damping member is formed into the shape of a V-shaped groove, the width of which gradually increases toward the attachment surface.

## Amended claims

### Amended claims under Art. 19.1 PCT

1. (Amended) A vibration-damping material which is attached to a convex outer surface of a base material, the material comprising:
a vibration-damping member which can be deformed in a bending manner, is partitioned into multiple blocks by multiple cuts which is formed in an attachment surface adhered to the outer surface, and is formed by connecting together portions of the blocks, with the portions positioned close to a surface which is opposite to the attachment surface,
wherein the vibration-damping member is partitioned into the multiple blocks by the cuts, and is formed by connecting together the portions of the blocks via a sheet-like member that can be deformed in a bending manner along the convex shape of the outer surface, with the portions positioned close to the surface which is opposite to the attachment surface.

2. (Deleted)

3. (Amended) The vibration-damping material according to claim 1,
wherein each of the cuts of the vibration-damping member is formed into the shape of a V-shaped groove, the width of which is gradually increased toward the attachment surface.

4. (Amended) The vibration-damping material according to claim 1 or 3,
wherein the attachment surface of the vibration-damping member is partitioned into polygonal blocks by the cuts.

5. A method for attaching a vibration-damping material in which a vibration-damping material is attached to a convex outer surface of a base material,
wherein a vibration-damping member is partitioned into multiple blocks by forming cuts in an attachment surface of the vibration-damping member adhered to the outer surface of the base material, the vibration-damping material is formed by connecting together the blocks via the provision of a sheet-like member on portions of the blocks, with the portions positioned close to a surface which is opposite to the attachment surface, and the attachment surface of the vibration-damping member is adhered to the outer surface of the base material.

6. The method for attaching a vibration-damping material according to claim 5,
wherein each of the cuts of the vibration-damping member is formed into the shape of a V-shaped groove, the width of which is gradually increased toward the attachment surface.
